# EUROPÄISCHE PATENTSCHRIFT

(11) **EP 0 817 673 B1**
(45) Veröffentlichungstag und Bekanntmachung des Hinweises auf die Patenterteilung: **27.01.1999**
(21) Anmeldenummer: 96905753.8
(22) Anmeldetag: 15.03.1996
(51) Int. Cl.: B01J 8/06, C01B 3/38

(54) **KATALYSATORROHR**
CATALYST PIPE
TUBE CATALYSEUR

(30) Priorität: 28.03.1995 DE 19512945
(43) Veröffentlichungstag der Anmeldung: 14.01.1998
(73) Patentinhaber: MANNESMANN Aktiengesellschaft, 40213 Düsseldorf (DE); K.T.I. Group B.V., NL-2700 AB Zoetermeer (NL)
(72) Erfinder: GIACOBBE, Francesco, I-00147 Roma (IT); COLETTI, Renzo, I-65016 Monte Silvino (IT)
(74) Vertreter: Meissner, Peter E., Dipl.-Ing.
(86) Internationale Anmeldenummer: DE9600489
(87) Internationale Veröffentlichungsnummer: WO9630116

(56) Entgegenhaltungen:
- EP-A- 0 080 270
- EP-A- 0 324 670
- AT-A- 320 393
- DE-A- 1 901 758
- DE-A- 2 803 138
- US-A- 3 666 423
- US-A- 5 172 476
- US-A- 5 271 151

## Beschreibung

Die Erfindung betrifft ein Katalysatorrohr mit den Merkmalen des Oberbegriffs des Patentanspruchs 1.

Endotherme katalytische Reaktionen werden üblicherweise in Reaktionsräumen durchgeführt, die in Form von langgestreckten Rohren ausgeführt sind, die mit einer Schüttung eines teilchenförmigen Katalysators gefüllt sind. Das durch die endotherme Reaktion zu behandelnde Prozeßmedium wird an einem Ende des Katalysatorrohrs eingeführt und am anderen Ende wieder abgeführt. Zur Aufrechterhaltung der Reaktion wird der Rohrmantel mit einem Heizmedium beaufschlagt, so daß ein indirekter Wärmeaustausch zum Prozeßmedium hin stattfinden kann. Ein in dieser Weise ausgeführter Reaktor hat den Nachteil, daß die Wärme, die in dem durch die katalytische Reaktion gebildeten Produkt enthalten ist, mit diesem Produkt aus dem Reaktorraum abgeführt wird. Dadurch stellt sich ein entsprechend hoher Energieverbrauch ein.

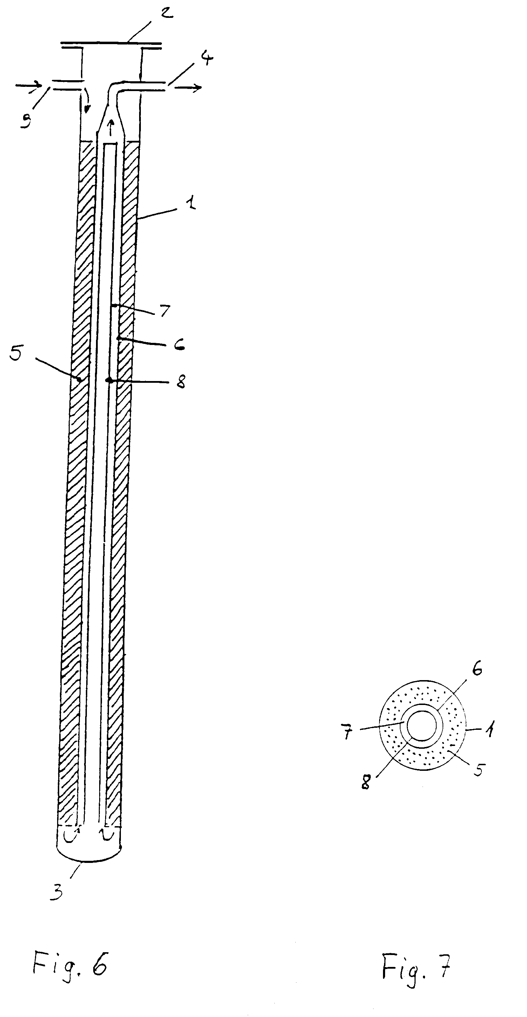

Zur Verminderung des Energieverbrauchs ist es bekannt, die Katalysatorrohre als Regenerativ-Katalysatorrohre auszubilden. Ein entsprechender Reaktor ist in der EP 0 369 556 B beschrieben. Eine Prinzipdarstellung dieses Katalysatorrohrs ist in Form eines Längsschnitts und eines Querschnitts in den Fig. 6 und 7 wiedergegeben. Das Katalysatorrohr weist ein langgestrecktes (z.B. 3 bis 14 m lang) äußeres Hüllrohr 1 auf, das z.B. durch heiße Rauchgase von außen beheizbar ist. Die beiden Stirnseiten des Hüllrohrs 1 sind durch Böden 2 und 3 dicht verschlossen, wobei der obere Boden 3 als abnehmbarer Flanschdeckel ausgeführt ist, um den teilchenförmigen Katalysator einfüllen zu können. Im Inneren des Hüllrohrs 1 ist koaxial zu dessen Längsachse ein Steigrohr 6 angeordnet, das sich praktisch über die gesamte Länge des Hüllrohrs 1 erstreckt und im unteren Teil unter Belassung eines Durchtrittsspaltes nahe am Boden 3 endet. Im oberen Teil ist das Steigrohr 6 seitlich durch den Mantel des Hüllrohrs 1 hindurchgeführt. Dicht unterhalb des Bodens 2 ist eine Zuleitung 9 für das zuzuführende Prozeßmedium angeordnet. Das durch die katalytische Reaktion gebildete Produkt kann unterhalb des Bodens 2 durch die Ableitung 4 abgeführt werden. Der ringförmige Zwischenraum zwischen der Innenoberfläche des Hüllrohrs 1 und der Außenoberfläche des Steigrohrs 6 ist mit einer Schüttung eines teilchenförmigen Katalysators 5 gefüllt. Wenn über die Zuleitung 9 das Prozeßmedium über den Katalysator 5 nach unten geleitet wird und das Hüllrohr 1 außen beheizt wird, findet ein indirekter Wärmeaustausch vom Heizmedium zum Prozeßmedium hin statt, so daß dieses bis auf Reaktionstemperatur erwärmt und die endotherme Reaktion durch die Wärmeübertragung aufrechterhalten wird. Die endotherme katalytische Reaktion wird beendet, sobald das zu behandelnde Medium das Katalysatorbett verlassen hat und im Bereich des unteren Bodens 3 angekommen ist. Dort wird die Strömungsrichtung des Mediums umgekehrt und das gebildete Produkt durch das Steigrohr 6 nach oben geleitet und durch die Ableitung 4 abgezogen. Das an der Innenwand des Steigrohrs 6 vorbeiströmende Produkt kann durch die Wand des Steigrohrs 6 hindurch Wärme an das Prozeßmedium abgeben. Auf diese Weise kann zumindest ein erheblicher Teil der in dem Produkt enthaltenen Wärme zurückgewonnen und zur Durchführung der endothermen Reaktion genutzt werden. Zur Intensivierung des indirekten Wärmeaustausches zwischen dem Produkt und dem Prozeßmedium ist koaxial im Inneren des Steigrohrs 6 ein als Strömungsverdrängungskörper 8 ausgebildeter Wärmeübertragungsförderer angeordnet, der im dargestellten Beispiel als rohrförmiger Hohlkörper gestaltet ist und an seinem oberen Stirnende dicht verschlossen ist, so daß das Produkt nicht durch das Innere des Strömungsverdrängungskörpers 8 hindurchströmen kann. Vielmehr wird die Strömung gezwungen, durch den Ringspalt 7 zwischen dem Steigrohr 6 und dem Strömungsverdrängungskörper 8 zu fließen. Dadurch wird die Strömungsgeschwindigkeit des Produkts spürbar gesteigert und die Wärmeübertragungsrate erhöht. Bei dieser wärmeübertragungstechnisch guten Lösung kann jedoch das Volumen, das durch den Strömungsverdrängungskörper 8 eingenommen wird, nicht genutzt werden.

Aus der GB 22 01 903 A ist ein Reaktor bekannt, der mit Katalysatorrohren bestückt ist, die in ähnlicher Weise als Regenerativ-Katalysatorrohre ausgebildet sind. Anstelle eines einzelnen Steigrohres ist im Inneren des Hüllrohres jedoch jeweils eine aus zwei Steigrohren bestehende Steigrohreinrichtung angeordnet. In Längsrichtung verlaufen die Steigrohre teilweise parallel zueinander und teilweise schraubenlinienförmig. Auf diese Weise wird das Verhältnis der Außenoberfläche der Steigrohreinrichtung zum Strömungsquerschnitt für das Produktgas größer als bei einem einzelnen Steigrohr mit gleichem Strömungsquerschnitt. Dadurch wird der Wärmeaustausch zwischen dem Produktgas und dem durch das Katalysatorbett geführten Prozeßgas verbessert.

Aufgabe der Erfindung ist es, ein Katalysatorrohr mit den Merkmalen des Oberbegriffs des Patentanspruchs 1 im Hinblick auf den Wärmeaustausch weiter zu verbessern, wobei eine gute Volumennutzung für das Katalysatorbett gewährleistet sein soll.

Gelöst wird diese Aufgabe für ein gattungsgemäßes Katalysatorrohr mit den kennzeichnenden Merkmalen des Patentanspruchs 1. Vorteilhafte Weiterbildungen der Erfindung sind in Unteransprüchen 2 bis 12 eingegeben.

Nachfolgend wird die Erfindung anhand der in den Figuren dargestellten schematischen Ausführungsbeispiele näher erläutert. Es zeigen:
- Fig. 1: einen schematischen Querschnitt eines erfindungsgemäßen Katalysatorrohrs,
- Fig. 2: unterschiedliche Stadien der Herstellung einer Leitungsstrangeinheit für ein erfindungsgemäßes Katalysatorrohr,
- Fig. 3: schematische Schnittbilder für die alternative Herstellung einer Leitungsstrangeinheit und
- Fig. 4: die Vorder- und Seitenansicht einer Leitungsstrangeinheit,
- Fig. 5: eine schlangenlinienförmig verlaufende Leitungsstrangeinheit,
- Fig. 6: einen Längsschnitt durch ein bekanntes Regenerativ-Katalysatorrohr,
- Fig. 7: einen Querschnitt durch das Katalysatorrohr gemäß Fig. 6.

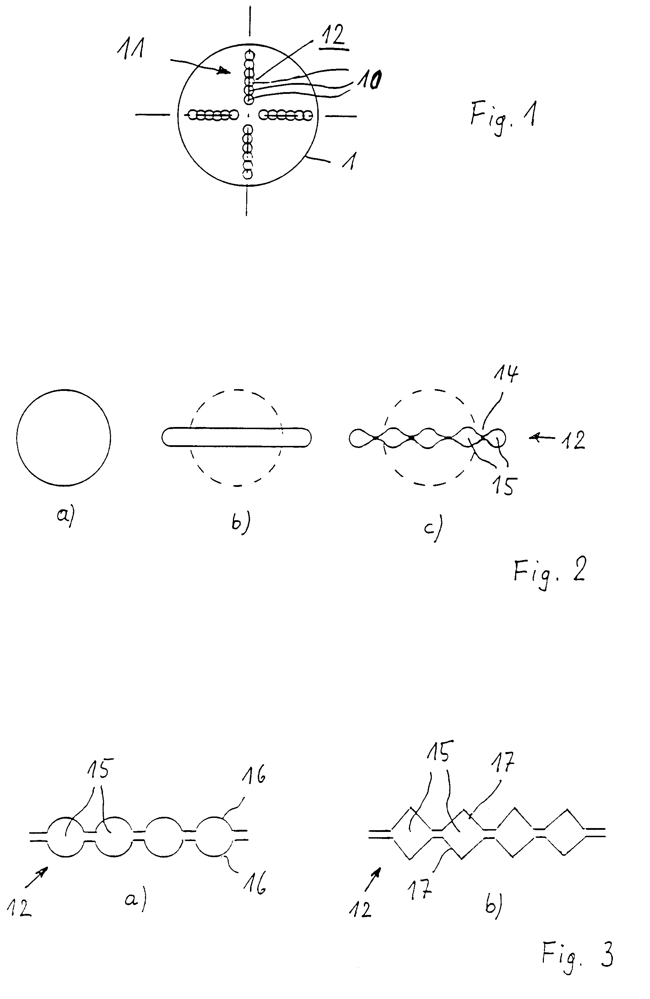

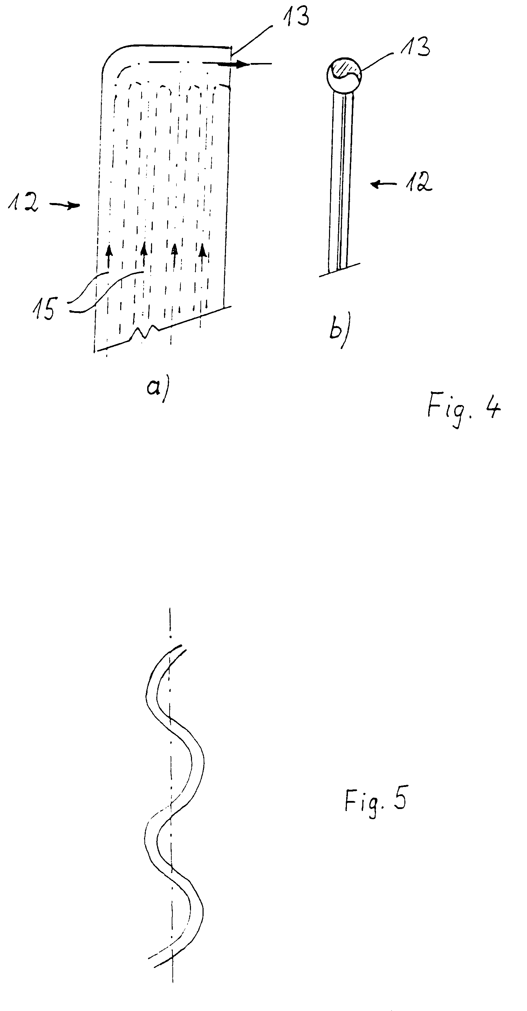

Der prinzipielle Aufbau eines erfindungsgemäßen Katalysatorrohrs entspricht dem Aufbau eines herkömmlichen Regenerativ-Katalysatorrohrs, wie es in den Fig. 6 und 7 dargestellt und vorstehend bereits erläutert ist. Anstelle eines zentralen Steigrohrs 6 mit einem koaxial darin angeordneten Strömungsverdrängkungskörper 8 sieht die Erfindung, wie Fig. 1 zeigt, als Steigrohreinrichtung 11 jedoch eine Vielzahl (z.B. mindestens 5 oder 10) von Leitungssträngen 10 vor, die sich in entsprechender Weise über die gesamte axiale Länge des Betts des Katalysators 5 erstrecken und dicht oberhalb des unteren Bodens 3 enden, so daß zwischen der unteren Stirnseite der Leitungsstränge 10 und dem Boden 3 ein ausreichender Durchtrittsspalt für die Ableitung des Produktes verbleibt. Die einzelnen Leitungsstränge 10 enden in einem Sammler 13, der in Fig. 4 dargestellt ist, die weiter unten noch näher erläutert wird. An den Sammler 13 wird dann entsprechend der Fig. 6 die Ableitung 4 angeschlossen.

Aus der schematischen Darstellung der Fig. 1 ist zu entnehmen, daß die Leitungsstränge 10 zu Gruppen zusammengefaßt sind, die jeweils eine körperliche Einheit, eine Leitungsstrangeinheit 12, bilden. Die einzelnen Leitungsstränge 10 beinhalten keinerlei Strömungsverdrängungskörper. Vielmehr steht deren gesamter Querschnitt für den Transport des Produktes zur Verfügung. Aus diesem Grunde kann die gesamte für die Steigrohreinrichtung erforderliche Querschnittsfläche erheblich kleiner gehalten werden, als dies beim Stand der Technik gemaß Fig. 6 möglich ist. Die dort vom Strömungsverdrängungskörper 8 in Anspruch genommene Querschnittsfläche kann bei der erfindungsgemäßen Ausführung vollständig genutzt werden, steht also für eine Vergrößerung des Flächenanteils für die Katalysatorfüllung zur Verfügung.

Die einzelnen Leitungsstränge 10 liegen ohne Zwischenraum unmittelbar aneinander und weisen jeweils einen relativ kleinen Querschnitt auf. Daher ist das Verhältnis der Außenoberfläche einer Leitungsstrangeinheit 12 zu ihrem Strömungsquerschnitt für das Produktgas wesentlich größer als bei dem bekannten Reaktor gemäß GB 22 01 903 A.

Es ist vorteilhaft, wie dies aus Fig. 1 entnehmbar ist, die Leitungsstrangeinheiten 12 im Querschnitt zu einem etwa sternförmigen Muster anzuordnen bzw. die Leitungsstrangeinheiten 12 mit ihrer Querachse radial zur Längsachse des Hüllrohrs 1 auszurichten. Zweckmäßigerweise sollten mehr als eine, insbesondere aber mindestens drei oder vier Leitungsstrangeinheiten 12 vorgesehen werden, so daß eine wirksame und großflächige Wärmeabgabe vom Produkt an das Prozeßmedium erfolgen kann. Auf der anderen Seite wird durch eine solche Anordnung der Wärmeaustausch zwischen dem von außen an das Hüllrohr 1 herangeführten Heizmedium und dem Prozeßmedium nicht behindert. Da die einzelnen Leitungsstrangeinheiten 12 bereits aus mehreren (z.B. mindestens 3, 4 oder 5) Leitungssträngen 10 bestehen, umfaßt die Steigrohreinrichtung 11 eines erfindungsgemäßen Katalysatorrohrs im allgemeinen mehr als 10, vorzugsweise mindestens 20 einzelne Leitungsstränge.

In Fig. 2 ist schematisch dargestellt, wie eine zusammenhängende Leitungsstrangeinheit 12 aus einem einfachen glatten Rohr von z.B. 25 mm Durchmesser hergestellt werden kann. Die Teilfigur a zeigt das unverformte Rohr, das in der Teilfigur b in einer flach zusammengedrückten Form dargestellt ist. Das Zusammendrücken erfolgt aber nur soweit, daß im Inneren noch ein ausreichender freier Querschnitt für den Durchfluß des Produktes verbleibt. In einem weiteren Bearbeitungsschritt, dessen Ergebnis in der Teilfigur c dargestellt ist, werden auf den Flachseiten des zusammengedrückten Rohres in dessen Längsrichtung Sicken 14 eingeformt, so daß sich die einander gegenüberliegenden Rohrinnenwände an mehreren Stellen (im dargestellten Beispiel vier Stellen) linienförmig berühren und dazwischen voneinander abgeschottete Strömungskanäle 15 bilden. Für die Funktion der Erfindung ist es nicht wesentlich, ob diese Strömungskanäle 15 vollständig voneinander abgeschottet sind oder entlang der Längsachse teilweise oder sogar vollständig noch miteinander in Verbindung stehen. Ein Leitungsstrang mit der in der Teilfigur b dargestellten flachen Form wäre jedoch wenig geeignet, da er durch die unvermeidbaren An- und Abfahrvorgänge beim Betrieb eines erfindungsgemäßen Katalysatorrohrs unkontrolliert verformt würde durch die Druckeinwirkung des Katalysatormaterials infolge der thermischen Dehnungen und Schrumpfungen. Es ist also wichtig, die Querschnitte der Leitungsstränge so auszubilden, daß sie einen hinreichenden Verformungswiderstand gegenüber äußerer Druckeinwirkung bieten. In dieser Hinsicht sind aus normalen runden Einzelrohren zusammengefügte Leitungsstrangeinheiten 12 zweifellos zweckmäßig. Eine weitere Alternative zur Herstellung einer Leitungsstrangeinheit 12 kann der Fig. 3 entnommen werden. Dort ist vorgesehen, zwei in Längsrichtung gewellte Bleche 16 bzw. 17 so aufeinander zu legen und an den Längsseiten miteinander dicht zu verbinden (z.B. Schweißen), daß wiederum in axialer Richtung verlaufende Strömungskanäle 15 im Bereich der Wellen gebildet werden. Die Wellen können im wesentlichen rund geformt sein (Teilfigur a) oder auch im Querschnitt dreieckig (Teilfigur b) oder in einer sonstigen beliebigen Weise geformt sein. Es kommt allein darauf an, daß sich durchgehende Strömungskanäle zwischen den aufeinander gelegten Blechen 16, 17 ausbilden.

In Fig. 4 ist eine Leitungsstrangeinheit 12 als Vorder- und Seitenansicht dargestellt. Die Strömungsrichtung des abzuziehenden Produktes ist durch Pfeile innerhalb der gestrichelt dargestellten Strömungskanäle angedeutet. Im oberen Teil der Leitungsstrangeinheit 12 enden alle Strömungskanäle 15 in einem Sammler 13. Der Sammler 13 wird entsprechend Fig. 6 an die Ableitung 4 angeschlossen.

Fig. 5 zeigt eine im Längsverlauf schlangenlinienförmig gebogene Leitungsstrangeinheit 12 in Ansicht ihrer schmalen Stirnseite. Eine solche Ausführung bietet Vorteile im Hinblick auf das Kompensieren thermischer Längendehnungen und führt zu einer weiteren Erhöhung des Verhältnisses von Außenoberfläche und Strömungsquerschnitt. Entsprechendes ließe sich auch durch eine z.B. schraubenlinienförmige Ausführung erreichen.

Um eine gute Wärmerückgewinnungsrate sicherzustellen, sollte das Oberflächenverhältnis der äußeren Oberfläche des Hüllrohrs 1 zur äußeren Oberfläche der Steigrohreinrichtung 11 kleiner als 3 sein. Ein bevorzugter Bereich dieses Verhältnisses liegt bei 1,0 bis 2,5, wobei der Wert 1,9 besonders bevorzugt ist. Die Auslegung der Querschnittsgestaltung der Steigrohreinrichtung 11 sollte so erfolgen, daß der verbleibende Durchschnittsquerschnitt des Hüllrohrs 1 durch die Steigrohreinrichtung 11 um weniger als 20 %. vorzugsweise weniger als 10 % verringert wird. Besonders bevorzugt ist es, diese Verringerung der Querschnittsfläche auf einen Bereich von etwa 1 bis 5 %, insbesondere etwa 2 % zu beschränken. Dies läßt sich ohne Probleme durch die Zahl der Strömungskanäle, also der Leitungsstränge 10 innerhalb der Leitungsstrangeinheiten beeinflussen. Je größer die Anzahl der Strömungskanäle ist, um so größer ist deren äußere Oberfläche, also um so kleiner das Oberflächenverhältnis. Durch die erfindungsgemäße Aufteilung der Steigrohreinrichtung 11 auf eine Vielzahl von zusammenhängenden Leitungssträngen 10 kann bei vergleichsweise außerordentlich geringem Platzbedart eine große Oberfläche für den Wärmeaustausch zwischen dem Prozeßmedium und dem Produktstrom geschaffen werden. Dies ermöglicht es, ein Regenerativ-Katalysatorrohr so kompakt zu bauen, daß es bei gleichem Katalysatorvolumen nur unwesentlich im Durchmesser größer ist als ein herkömmliches Katalysatorrohr mit einfachem linearem Strömungsdurchgang, daß es aber mindestens gleich gute, vielfach sogar bessere wärmetechnische Eigenschaften (geringer Heizenergiebedarf) hat als ein im Durchmesser deutlich größeres Regenerativ-Katalysatorrohr mit einzelnem Steigrohr. Auch gegenüber einer aus zwei schraubenlinienförmig gebogenen einzelnen Steigrohren bestehenden Steigrohreinrichtung weist die erfindungsgemäße Steigrohreinrichtung 11 große wärmetechnische Vorteile auf, da das Verhältnis von Außenoberfläche und Durchtrittsquerschnitt für das Produktmedium erheblich größer ist. Es ist eine leichte Anpassung an die wärmetechnischen Erfordernisse dadurch möglich, daß z.B. bei einer Herstellung der Steigrohreinheiten gemäß Fig. 2 der Grad der Oberflächenverformung (Anzahl der Sicken) des als Ausgangsmaterial eingesetzten Rohres entsprechend unterschiedlich gewählt wird.

## Patentansprüche

1. Katalysatorrohr für eine endotherme katalytische Reaktion eines Prozeßmediums, mit einem äußeren Hüllrohr (1), das an seinen Stirnseiten durch einen ersten (2) und einen zweiten Boden (3) dicht verschlossen ist, wobei einer der Böden (2, 3) zur Einfüllung eines Katalysators (5) öffenbar ist, und außen durch ein Heizmedium beheizbar ist, ferner mit einer im Inneren des Hüllrohrs (1) angeordneten Steigrohreinrichtung (11), die im Nahbereich des ersten Bodens (2) mit einer nach außen geführten Ableitung (4) für das durch Katalyse des Prozeßmediums entstandene Produkt verbunden ist, und mit einer in dem Zwischenraum zwischen Hüllrohr (1) und Steigrohreinrichtung (11) angeordneten Katalysatorfüllung (5), wobei die Steigrohreinrichtung (11) durch eine Vielzahl von Leitungssträngen (10), die in einem an die Ableitung (4) für das Produkt angeschlossenen Sammler (13) enden, gebildet ist und unter Belassung eines Durchtrittsspalts dicht vor dem zweiten Boden (3) des Hüllrohrs (1) endet und wobei im Nahbereich des ersten Bodens (2) des Hüllrohrs (1) eine Zuleitung (9) für die Zufuhr des Prozeßmediums zur Katalysatorfüllung (5) angeordnet ist,
dadurch gekennzeichnet,
daß die Leitungsstränge (10) zu Gruppen zusammengefaßt sind, die jeweils eine körperliche Einheit (Leitungsstrangeinheit (12)) bilden.

2. Katalysatorrohr nach Anspruch 1,
dadurch gekennzeichnet,
daß eine Leitungsstrangeinheit (12) jeweils aus einem flach gedrückten Rohrstück gebildet ist, dessen Flachseiten in Richtung der Längsachse mit Sicken (14) profilliert sind, so daß innerhalb des Rohrstücks parallele Strömungskanäle (15) bestehen.

3. Katalysatorrohr nach Anspruch 1.
dadurch gekennzeichnet,
daß eine Leitungsstrangeinheit (12) jeweils aus zwei aufeinander gelegten und an den in Längsrichtung verlaufenden Außenkanten miteinander verschweißten gewellten Blechen (16, 17) besteht, wobei die Wellen der Bleche in Längsrichtung der Leitungsstrangeinheit (12) verlaufen.

4. Katalysatorrohr nach einem der Ansprüche 1 bis 3,
dadurch gekennzeichnet,
daß die Leitungsstrangeinheit (12) in Längsrichtung schlangenlinienförmig oder schraubenlinienförmig gebogen ist.

5. Katalysatorrohr nach einem der Ansprüche 1 bis 4,
dadurch gekennzeichnet,
daß die Leitungsstrangeinheiten (12) im Querschnitt zu einem etwa sternförmigen Muster angeordnet sind.

6. Katalysatorrohr nach einem der Ansprüche 1 bis 4,
dadurch gekennzeichnet,
daß die Leitungsstrangeinheiten (12) mit ihrer Querachse radial zur Längsachse des Hüllrohrs (1) angeordnet sind.

7. Katalysatorrohr nach einem der Ansprüche 1 bis 6,
dadurch gekennzeichnet,
daß jede Leitungsstrangeinheit (12) aus mindestens drei, insbesondere aus mindestens fünf Leitungssträngen (10) besteht.

8. Katalysatorrohr nach einem der Ansprüche 1 bis 7,
dadurch gekennzeichnet,
daß mehr als eine, insbesondere mindestens drei oder vier Leitungsstrangeinheiten (12) vorgesehen sind.

9. Katalysatorrohr nach einem der Ansprüche 1 bis 8,
dadurch gekennzeichnet,
daß das Oberflächenverhältnis der äußeren Oberfläche des Hüllrohrs (1) zur äußeren Oberfläche der Steigrohreinrichtung weniger als 3,0 beträgt.

10. Katalysatorrohr nach Anspruch 9,
dadurch gekennzeichnet,
daß das Oberflächenverhältnis zwischen 1,0 und 2,5, insbesondere bei etwa 1,9 liegt.

11. Katalysatorrohr nach einem der Ansprüche 1 bis 10,
dadurch gekennzeichnet,
daß die Steigrohreinrichtung so bemessen ist, daß die Fläche des Durchtrittsquerschnitts des Hüllrohrs (1) durch die Steigrohreinrichtung um weniger als 20 %, insbesondere weniger als 10 % verringert wird.

12. Katalysatorrohr nach Anspruch 11,
dadurch gekennzeichnet,
daß die Steigrohreinrichtung so bemessen ist, daß die Verringerung der Querschnittsfläche im Bereich von 1 bis 5 %, insbesondere bei etwa 2 % liegt.

## Claims

1. Catalyst tube for an endothermic catalytic reaction of a process medium, comprising an outer envelope tube (1), which is sealed in a sealing-tight manner at its end faces by a first (2) and a second base (3), wherein one of the bases (2, 3) is openable for the introduction of a catalyst (5) and is heatable on the exterior by a heating medium, further comprising a rising tube device (1) which is disposed inside the envelope tube (1) and which in the vicinity of the first base (2) is connected to a discharge line (4) passing to the exterior for the product arising from catalysis of the process medium, and comprising a catalyst filling (5) disposed in the gap between the envelope tube (1) and the rising tube device (11), in which case the rising tube device (11) is formed by a large number of line strands (10) which end in a collector (13) connected to the discharge tube (4) for the product, and ends flush in front of the second base (3) of the envelope tube (1) leaving a passage slot and in which case in the vicinity of the first base (2) of the envelope tube (1) a supply line is disposed for the supply of process medium for introducing the catalyst, characterised in that the line strands (10) are combined into groups, each forming a physical unit (line strand unit 12)).

2. Catalyst tube according to claim 1, characterised in that each line strand unit (12) is formed out of a flat-pressed tube member, whose flat sides are profiled in the direction of the longitudinal axis with beads (14), so that inside the tube member parallel flow channels (15) exist.

3. Catalyst tube according to claim 1, characterised in that each line strand unit (12) consists of two corrugated metal sheets (16, 17) laid one on top of another and welded together at the outer edges extending in the longitudinal direction, the corrugations of the sheets extending in the longitudinal direction of the line strand unit (12).

4. Catalyst tube according to one of claims 1 to 3, characterised in that the line strand unit (12) is curved in the longitudinal direction in a serpentine or helical manner.

5. Catalyst tube according to one of claims 1 to 4, characterised in that the line strand units (12) are arranged in cross-section into an approximately star-shaped pattern.

6. Catalyst tube according to one of claims 1 to 4, characterised in that the line strand units (12) are disposed with their transverse axis radial to the longitudinal axis of the envelope tube (1).

7. Catalyst tube according to one of claims 1 to 6, characterised in that each line strand unit (12) consists of at least three, in particular at least five line strands (10).

8. Catalyst tube according to one of claims 1 to 7, characterised in that more than one, in particular at least three or four line strand units (12) are provided.

9. Catalyst tube according to one of claims 1 to 8, characterised in that the surface ratio of the outer surface of the envelope tube (1) to the outer surface of the rising tube device is less than 3.0.

10. Catalyst tube according to claim 9, characterised in that the surface ratio lies between 1.0 and 2.5, in particular at approximately 1.9.

11. Catalyst tube according to one of claims 1 to 10, characterised in that the rising tube device is so dimensioned that the area of the average cross-section of the envelope tube (1) is reduced by the rising tube device by less than 20%, in particular less than 10%.

12. Catalyst tube according to claim 11, characterised in that the rising tube device is so dimensioned that the reduction in cross-sectional area is in the range of 1 to 5%, in particular approximately 2%.

## Revendications

1. Tube pour catalyseur pour une réaction catalytique endothermique d'un milieu de procédé, comportant un tube d'enveloppe externe (1), qui est fermé de façon étanche, à ses faces frontales, par un premier fond (2) et un second fond (3), un des fonds (2,3) pouvant être ouvert pour le remplissage par un catalyseur (5), et pouvant être chauffé, extérieurement, par un fluide de chauffage, comportant de plus un dispositif de tubes ascendants (11) agencé à l'intérieur du tube d'enveloppe (1), qui est relié, dans la zone voisine du premier fond (2), à un conduit d'évacuation (4) guidé vers l'extérieur pour le produit créé par la catalyse du milieu de procédé, et comportant un remplissage de catalyseur (5) agencé dans l'espace intermédiaire entre le tube d'enveloppe (1) et le dispositif de tubes ascendants (11), le dispositif de tubes ascendants (11) étant formé par une pluralité de conduits (10), qui s'achèvent dans un collecteur (13) raccordé au conduit d'évacuation (4) pour le produit, et s achevant, en laissant une fente de passage, juste avant le second fond (3) du tube d'enveloppe (1) et, dans la zone voisine du premier fond (2) du tube d'enveloppe (1), il est agencé un conduit d'amenée (9) pour l'amenée du milieu de procédé vers le remplissage de catalyseur (5), caractérisé en ce que les conduits (10) sont réunis en groupes, qui forment, à chaque fois, une unité physique (unité de conduits (12)).

2. Tube pour catalyseur selon la revendication 1,
caractérisé en ce qu'une unité de conduits (12) est formée à chaque fois à partir d'une pièce tubulaire pressée plate, dont les faces plates sont profilées en direction de l'axe longitudinal en ayant des moulures (14), de sorte que, à l'intérieur de la pièce tubulaire, on obtient des canaux d'écoulement parallèles (15).

3. Tube pour catalyseur selon la revendication 1,
caractérisé en ce qu'une unité de conduits (12) est constituée, à chaque fois, de deux tôles ondulées (16, 17) montées l'une sur l'autre et soudées ensemble sur les bords externes s'étendant en direction longitudinale, les ondulations des tôles s'étendant en direction longitudinale de l'unité de conduits (12).

4. Tube pour catalyseur selon une des revendications 1 à 3,
caractérisé en ce que l'unité de conduits (12) est cintrée, en direction longitudinale, de façon serpentiforme ou de façon hélicoïdale.

5. Tube pour catalyseur selon une des revendications 1 à 4,
caractérisé en ce que les unités de conduits (12) sont agencées, en section transversale, en un motif sensiblement en étoile.

6. Tube pour catalyseur selon une des revendications 1 à 4,
caractérisé en ce que les unités de conduits (12) sont agencées en ayant leur axe transversal radial par rapport à l'axe longitudinal du tube d'enveloppe (1).

7. Tube pour catalyseur selon une des revendications 1 à 6,
caractérisé en ce que chaque unité de conduits (12) est constituée d'au moins trois, en particulier d'au moins cinq conduits (10).

8. Tube pour catalyseur selon une des revendications 1 à 7,
caractérisé en ce que plus d'une, en particulier au moins trois ou quatre unités de conduits (12) sont prévues.

9. Tube pour catalyseur selon une des revendications 1 à 8,
caractérisé en ce que le rapport de la surface externe du tube d'enveloppe (1) à la surface externe du dispositif de tubes ascendants vaut moins de 3,0.

10. Tube pour catalyseur selon la revendication 9,
caractérisé en ce que le rapport desdites surfaces se trouve entre 1,0 et 2,5, en particulier environ 1,9.

11. Tube pour catalyseur selon une des revendications 1 à 10,
caractérisé en ce que le dispositif de tubes ascendants est dimensionné de sorte que la surface de la section transversale de passage du tube d'enveloppe (1) est diminuée par le dispositif de tubes ascendants de moins de 20%, en particulier de moins de 10%.

12. Tube pour catalyseur selon la revendication 11,
caractérisé en ce que le dispositif de tubes ascendants est dimensionné de sorte que la diminution de la surface de section transversale vaut dans la plage de 1 à 5%, en particulier environ 2%.
